# EUROPÄISCHE PATENTSCHRIFT

(11) **EP 1 241 835 B1**
(45) Veröffentlichungstag und Bekanntmachung des Hinweises auf die Patenterteilung: **03.01.2007**
(21) Anmeldenummer: 02005708.9
(22) Anmeldetag: 13.03.2002
(51) Int. Cl.: H04L 29/06, H04L 12/40

(54) **Empfangseinrichtung für einen CAN-Bus**
Receiving device for a CAN (Control Area Network) Bus
Dispositif de réception pour un CAN-bus

(30) Priorität: 17.03.2001 DE 10112950
(43) Veröffentlichungstag der Anmeldung: 18.09.2002
(73) Patentinhaber: Infineon Technologies AG, 81669 München (DE)
(72) Erfinder: Barrenscheen, Jens, Dr., 81669 München (DE); Wünsche, Thomas, Dr., 85304 Illmünster (DE)
(74) Vertreter: Repkow, Ines

(56) Entgegenhaltungen:
- DE-A- 4 129 412
- US-A- 5 323 385
- US-A- 5 469 150
- US-A- 5 854 454
- "The ON-Chip CAN Interface, C164 Group" September 1999 (1999-09) , INFINEON XP002157161 * Seite 15 - Seite 28 *
- "CAN serial communications Controller" INTEL, April 1996 (1996-04), Seiten 1-42, XP002157394 Gefunden im Internet: <URL:ftp://download.intel.com/design/auto/ can/manuals/27278701.PDF> [gefunden am 2001-01-16]
- "Replacing dedicated protocoll controllers with code efficiant and configurable microcontroller-low speed CAN network applications" NATIONAL SEMICONDUCTOR, 1997, Seiten 1-8, XP002157760 Gefunden im Internet: <URL:http://www.national.com/an/AN/AN-1048 .pdf> [gefunden am 2001-01-18]

## Beschreibung

Die vorliegende Erfindung betrifft eine Vorrichtung gemäß dem Oberbegriff des Patentanspruchs 1.

Derartige Empfangseinrichtungen werden beispielsweise in an einen CAN-Bus angeschlossenen Einheiten verwendet; CAN steht für Controller Area Network, welches ein seit vielen Jahren bekanntes und weit verbreitetes Netzwerk zur Verbindung von dezentral angeordneten Einheiten ist.

Die an einen CAN-Bus angeschlossenen Einheiten bestehen aus
- einem für das Ausgeben von zu übertragenden Daten auf den CAN-Bus und/oder für das Empfangen von über den CAN-Bus übertragenen Daten zuständigen und unter anderem die erwähnte Empfangseinrichtung enthaltenden CAN-Controller,
- die zu versendenden Daten bereitstellenden und/oder die empfangenen Daten verarbeiteten weiteren Komponenten (beispielsweise einer CPU), und
- als Message Objects bezeichnete und durch mehr oder weniger große Speicher oder Speicherbereiche gebildete Schnittstellen zwischen dem CAN-Controller und den weiteren Komponenten der an den CAN-Bus angeschlossenen Einheiten.

Beim CAN erfolgt die Übertragung von Daten in Einheiten von sogenannten Messages. Eine Message umfaßt eine bestimmte Anzahl von Datenbits, und ist in mehrere Felder unterteilt.

Eines dieser Felder ist das sogenannte Identifier-Feld. Dieses Feld umfaßt 11 Bits (Standard-CAN-Identifier) oder 29 Bits (beim CAN 2.0B Protokoll) und enthält Angaben über den Inhalt der empfangenen Daten, genauer gesagt Angaben über die durch die betreffende Message übertragene oder angeforderte Information.

Die im Identifier-Feld enthaltenen Daten können beispielsweise angeben, daß die betreffende Message die Öltemperatur betrifft, genauer gesagt, daß es sich bei den eigentlich zu übertragenen (im sogenannten Data-Feld der Message übertragenen) Daten um die Öltemperatur handelt, bzw. daß es sich bei der Information, welche die die Message ausgebende Einheit anfordert, um die Öltemperatur handelt.

Der Inhalt des Identifier-Feldes ist der Teil der Daten, den die Empfangseinrichtung aus den empfangenen Daten (aus der Message) extrahiert, um festzulegen, wie sie die empfangenen Daten (diese Message) zu behandeln hat.

Im betrachteten Beispiel, d.h. beim Einsatz der Empfangseinrichtung in einem CAN-Controller, entscheidet die Empfangseinrichtung abhängig vom Inhalt des Identifier-Feldes, ob und gegebenenfalls welchem Message Objekt die jeweilige Message zuzuführen ist.

Wenn beispielsweise durch das Identifier-Feld anzeigt wird, daß die dieses Identifier-Feld enthaltende Message die Öltemperatur betrifft, so nehmen
- die Empfangseinrichtungen aller Einheiten, die abhängig von der Öltemperatur arbeiten oder Informationen über die Öltemperatur für sonstige Zwecke benötigen, bzw.
- die Empfangseinrichtungen aller Einheiten, die die Öltemperatur ermitteln und ausgeben können,
die betreffende Message entgegen, und leiten sie oder ausgewählte Teile derselben an das Message Object weiter, das der die Öltemperatur verarbeitenden oder ermittelnden Komponente der die Empfangseinrichtung enthaltenden Einheit zugeordnet ist; die Empfangseinrichtungen aller anderen Einheiten lassen die betreffende Message unberücksichtigt.

Zur Ermittlung, wie die Empfangseinrichtung über den CAN-Bus empfangene Daten (Messages) zu behandeln hat, existieren verschiedene Möglichkeiten.

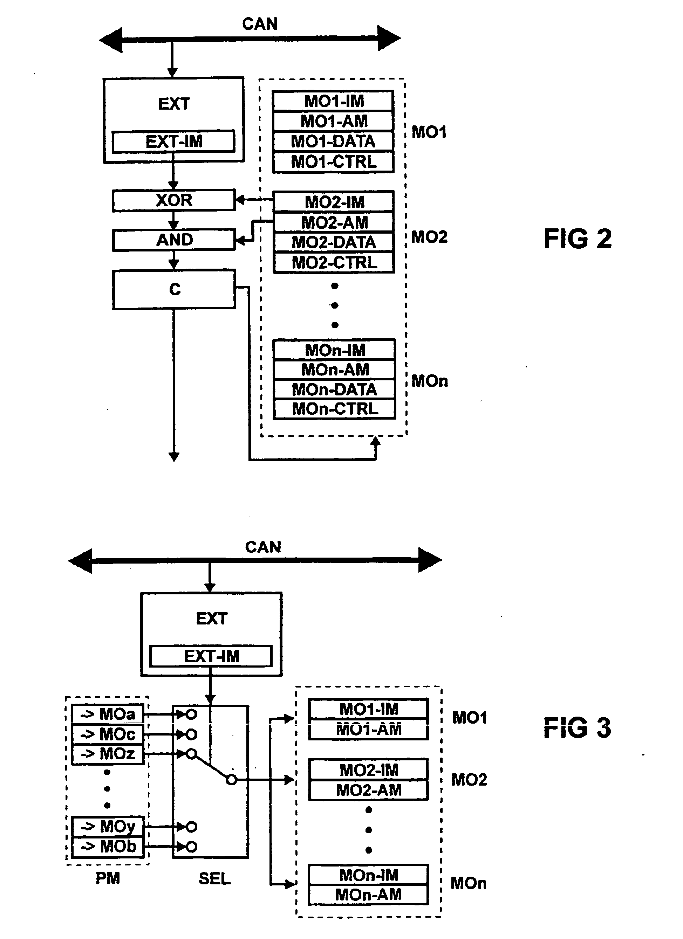

Eine erste Möglichkeit ist in Figur 2 veranschaulicht und wird nachfolgend unter Bezugnahme darauf beschrieben.

Die in der Figur 2 dargestellte Anordnung zeigt ausschnittsweise die Empfangseinrichtung und die Message Objects einer an einen CAN-Bus CAN angeschlossenen Einheit und enthält eine Extrahierungsvorrichtung EXT, Message Objects MO1, MO2, ... MOn, ein XOR-Glied XOR, ein UND-Glied AND, und eine Vergleichseinrichtung C, wobei
- die Extrahierungsvorrichtung EXT aus über den CAN-Bus CAN übertragenen Messages das Identifier-Feld extrahiert und in einem Identifier-Speicher EXT-IM speichert,
- die Message Objects MO1, M02, ... MOn jeweils einen Identifier-Speicher MO1-IM, M02-IM, ... bzw. MOn-IM, einen Akzeptanzmasken-Speicher MO1-AM, MO2-AM, ... bzw. MOn-AM, und weitere Speicher MO1-DATA, MO2-DATA, ... bzw. MOn-DATA, und MO1-CTRL, MO2-CTRL, ... bzw. MOn-CTRL enthalten, wobei
   - in den Identifier-Speichern MO1-IM, MO2-IM, ... bzw. MOn-IM jeweils ein den jeweiligen Message Objects zugeordneter Identifier gespeichert ist,
   - in den Akzeptanzmasken-Speichern MO1-AM, MO2-AM, ... bzw. MOn-AM den jeweiligen Message Objects zugeordnete Akzeptanzmasken gespeichert sind, und
   - in den Speichern MO1-DATA, MO2-DATA, ... bzw. MOn-DATA und MO1-CTRL, MO2-CTRL, ... bzw. MOn-CTRL die Messages oder ausgewählte Teile der Messages gespeichert werden, deren Identifier in den durch die jeweilige Akzeptanzmaske bestimmten Teilen mit den in den jeweiligen Message Objects gespeicherten Identifiern übereinstimmen,
- das XOR-Glied den im Identifier-Speicher EXT-IM der Extrahierungsvorrichtung EXT gespeicherten Identifier und den im Identifier-Speicher MO1-IM, MO2-IM, ... bzw. MOn-IM eines ausgewählten Message Objects MO1, M02, ... bzw. MOn gespeicherten Identifier bitweise einer XOR-Verknüpfung unterzieht,
- das UND-Glied AND das Ergebnis der XOR-Verknüpfung und die im Akzeptanzmasken-Speicher MO1-AM, MO2-AM, ... bzw. MOn-AM des ausgewählten Message Objects MO1, M02, ... bzw. MOn gespeicherte Akzeptanzmaske bitweise einer UND-Verknüpfung unterzieht, und
- die Vergleichseinrichtung C überprüft, ob das Ergebnis der UND-Verknüpfung gleich oder ungleich Null ist.

Die Empfangseinrichtung überprüft durch die erwähnte XOR-Verknüpfung und die erwähnte UND-Verknüpfung der Reihe nach für jedes Message Object, ob der durch die Extrahierungsvorrichtung EXT aus der gerade übertragenen Message extrahierte Identifier in den durch die jeweilige Akzeptanzmaske bestimmten Teilen mit dem in den jeweiligen Message Objects gespeicherten Identifier übereinstimmt. Eine solche Übereinstimmung liegt vor, wenn vom UND-Glied AND der Wert 0 ausgegeben wird. Bei festgestellter Übereinstimmung schreibt die Empfangseinrichtung die gerade übertragene Message oder ausgewählte Teile derselben in die Speicher MO1-DATA, MO2-DATA, ... bzw. MOn-DATA und MO1-CTRL, MO2-CTRL, ... bzw. MOn-CTRL des betreffenden Message Objects ein. Anderenfalls wird die Überprüfung beim nächsten Message Object fortgesetzt. Wenn sich bei keinem der Message Objects eine Übereinstimmung ergibt, läßt die Empfangseinrichtung die gerade übertragene Message unbeachtet.

Die dabei im einzelnen ablaufenden Vorgänge werden kurz anhand eines Beispiels beschrieben.

Es sei angenommen, daß die Übereinstimmungs-Überprüfung beim ersten Message Object MO1 beginnt. Dann werden
- der im Identifier-Speicher EXT-IM der Extrahierungsvorrichtung EXT gespeicherte Identifier und der im Identifier-Speicher MO1-IM des ersten Message Objects MO1 gespeicherte Identifier einer XOR-Verknüpfung unterzogen, und
- das Ergebnis der XOR-Verknüpfung und die im Akzeptanzmasken-Speicher MO1-AM des ersten Message Objects MO1 gespeicherte Akzeptanzmaske einer UND-Verknüpfung unterzogen.

Wenn der im Identifier-Speicher EXT-IM der Extrahierungsvorrichtung EXT gespeicherte Identifier und der im Identifier-Speicher MO1-IM des ersten Message Objects MO1 gespeicherte Identifier übereinstimmen, ist das Ergebnis der XOR-Verknüpfung und damit auch das Ergebnis der UND-Verknüpfung gleich 0. Wenn die Vergleichseinrichtung C feststellt, daß ihr der Wert 0 zugeführt wird, beendet sie die übereinstimmungs-Überprüfung und veranlaßt, daß die gerade über den CAN-Bus CAN übertragene Message oder ein ausgewählter Teil derselben in einen dafür reservierten Speicherbereich des ersten Message Objects MO1 gespeichert und zur Abholung durch eine andere Komponente bereitgestellt wird.

Wenn der im Identifier-Speicher EXT-IM der Extrahierungsvorrichtung EXT gespeicherte Identifier und der im Identifier-Speicher MO1-IM des ersten Message Objects MO1 gespeicherte Identifier nicht übereinstimmen, hängt es von der im Akzeptanzmasken-Speicher MO1-AM des ersten Message Objects MO1 gespeicherten Akzeptanzmaske ab, ob das Ergebnis der UND-Verknüpfung gleich 0 oder ungleich 0 wird. Wenn die Akzeptanzmaske an denjenigen Stellen, an welchen sich die der XOR-Verknüpfung unterzogenen Identifier unterschieden, eine 0 aufweist, wird das Ergebnis auch in diesem Fall gleich 0. Dies hat wie im vorstehend beschriebenen Fall zur Folge, daß die Übereinstimmungs-Überprüfung beendet, und veranlaßt wird, daß die gerade über den CAN-Bus CAN übertragene Message oder ein ausgewählter Teil derselben in das erste Message Object MO1 geschrieben und zur Abholung durch eine andere Komponente bereitgestellt wird.

Durch das Vorsehen der Akzeptanzmaske und deren UND-Verknüpfung mit dem Ergebnis der XOR-Verknüpfung wird bewirkt, daß der aus der Message extrahierte Identifier in einem einzigen Arbeitsgang mit einer mehrere verschiedene Identifier umfassenden Gruppe von Identifiern verglichen wird. Dies ist sinnvoll, wenn einem Message Object verschiedene Identifier aufweisende Messages zugeführt werden können oder müssen, und erweist sich als vorteilhaft weil sich dadurch die Anzahl der Übereinstimmungs-Überprüfungen gering halten läßt.

Wenn das Ergebnis der UND-Verknüpfung ungleich 0 ist, bedeutet dies, daß es sich bei der gerade übertragenen Message nicht um eine Message handelt, die dem Message Object MO1 zuzuführen ist. Die Vergleichseinrichtung C veranlaßt daraufhin, daß die Übereinstimmungs-Überprüfung beim einem anderen Message Object, beispielsweise beim Message Object M02 fortgesetzt wird, wodurch überprüft wird, ob es sich bei der gerade übertragenen Message um eine dem Message Object MO2 zuzuführende Message handelt. Die Übereinstimmungs-Überprüfung erfolgt wie beim ersten Message Object MO1.

Stellt sich hierbei heraus, daß es sich bei der gerade übertragenen Message um eine Message handelt, die dem Message Object M02 zuzuführen ist, wird die Übereinstimmungs-Überprüfung beendet und veranlaßt, daß die gerade über den CAN-Bus CAN übertragene Message oder ein ausgewählter Teil derselben in den dafür reservierten Speicherbereich des zweiten Message Objects M02 gespeichert und zur Abholung durch eine andere Komponente bereitgestellt wird.

Handelt es sich bei der gerade übertragenen Message hingegen nicht um eine Message, die dem Message Object M02 zuzuführen ist, so veranlaßt die Vergleichseinrichtung C wiederum, daß die Übereinstimmungs-Überprüfung beim einem anderen Message Object, beispielsweise beim Message Object MOn durchgeführt wird. Hierbei wiederholen sich die zuvor beschriebenen Vorgänge.

Wenn die Übereinstimmungs-Überprüfung für alle Message Objects durchgeführt wurde, und kein Message Object gefunden wurde, dem die gerade übertragene Message zuzuführen ist, nimmt die Empfangseinrichtung die betreffende Message nicht entgegen.

Die vorstehend beschriebene Überprüfung hat vor allem dann, wenn die die Empfangseinrichtung enthaltende Einheit viele Message Objects enthält, schwerwiegende Nachteile: sie dauert lange und verzögert wegen der häufigen Zugriffe auf die die Message Objects bildende Speichereinrichtung die Abholung und Weiterverarbeitung der in den Message Objects gespeicherten Messages oder Message-Teile. Das Vorsehen der Akzeptanzmasken schafft hier nur teilweise Abhilfe. Hierzu ist es erforderlich, daß die Identifier der Messages, die einem bestimmten Message Object zuzuführen sind, sich nur in den durch die Akzeptanzmaske ausmaskierten Bits unterscheiden, und daß nur so viele und solche Bits ausmaskiert werden, daß den Message Objects nicht auch solche Message Objects zugeführt werden, die ihnen gar nicht zugeführt werden sollen, was aber aus verschiedenen Gründen, auf die hier nicht näher eingegangen werden soll, in der Praxis häufig nicht der Fall ist.

Eine weitere Möglichkeit zur Ermittlung, wie die Empfangseinrichtung über den CAN-Bus empfangene Daten (Messages) zu behandeln hat, ist in Figur 3 veranschaulicht und wird nachfolgend unter Bezugnahme hierauf beschrieben.

Die in der Figur 3 dargestellte Anordnung zeigt ausschnittsweise die Empfangseinrichtung und die Message Objects einer an einen CAN-Bus CAN angeschlossenen Einheit und enthält eine Extrahierungsvorrichtung EXT, Message Objects MO1, MO2, ... MOn, eine beispielsweise durch einen Multiplexer gebildete Auswahlvorrichtung SEL, und einen (Pointer-)Speicher PM, wobei
- die Extrahierungsvorrichtung EXT der Extrahierungsvorrichtung EXT gemäß Figur 2 entspricht,
- die Message Objects MO1, MO2, ... MOn hinsichtlich der Funktion und der praktischen Realisierung den Message Objects MO1, MO2, ... MOn der in der Figur 2 gezeigten Anordnung entsprechen, aber keinen Identifier-Speicher und keine Akzeptanzmasken-Speicher aufweisen und auch nicht anderswo einen Identifier und eine Akzeptanzmaske speichern,
- der Pointer-Speicher eine der Anzahl der möglichen Identifier entsprechende Anzahl von Speicherelementen (also 2¹¹ bzw. 2²⁹ Speicherelemente) aufweist und in jedem Speicherelement ein Wert (ein Pointer) gespeichert ist der angibt, welchem Message Object eine Message mit einem der Ordnungszahl des jeweiligen Speicherelements entsprechenden Identifier zuzuführen ist, und
- die Auswahlvorrichtung SEL
- eine der Anzahl der Speicherelemente des Pointer-Speichers entsprechende Anzahl von Eingangsanschlüssen aufweist und eingangsseitig mit allen Speicherelementen des Pointer-Speichers PM verbunden ist,
- durch den aus der übertragenen Message extrahierten Identifier gesteuert wird, und
- einen das Message Object, an welches die gerade übertragende Message weiterzuleiten ist, bezeichnenden Pointer ausgibt.

Der Pointer-Speicher PM und die Auswahleinrichtung SEL ermöglichen es, daß in einem einzigen Arbeitsgang ermittelt wird, ob und gegebenenfalls welchem Message Object die gerade über den CAN-Bus CAN übertragene Message zuzuführen ist.

Entsprechendes gilt für den Fall, daß der aus der Message extrahierte Identifier als Adresse zur Adressierung des Pointer-Speichers PM verwendet wird; in diesem Fall könnte auf die Auswahlvorrichtung SEL verzichtet werden.

Die durch die beschriebene Anordnung durchführbare Ermittlung, ob und gegebenenfalls welchem Message Object die gerade über den CAN-Bus CAN übertragene Message zuzuführen ist, ist aber insbesondere wegen der erforderlichen Größe des Pointer-Speichers PM sowohl bei hardwaremäßiger Realisierung als auch bei softwaremäßiger Realisierung nur mit einem sehr großen Aufwand realisierbar.

Eine weitere Empfangseinrichtung ist aus "The ON-Chip CAN-Interface, C164 Group", September 1999 (1999-09), INFINEON XP002157161 bekannt. Die in diesem Dokument beschriebene Empfangseinrichtung ist eine Empfangseinrichtung gemäß dem Oberbegriff des Anspruchs 1.

Eine weitere Empfangseinrichtung ist aus Dokument US-A-5 854 454 bekannt.

Der vorliegenden Erfindung liegt daher die Aufgabe zugrunde, die Empfangseinrichtung gemäß dem Oberbegriff des Patentanspruchs 1 derart weiterzubilden, daß mit geringem Aufwand schnell und einfach entschieden werden kann, wie die Empfangseinrichtung die empfangenen Daten zu behandeln hat.

Diese Aufgabe wird erfindungsgemäß durch die in Patentanspruch 1 beanspruchte Empfangseinrichtung gelöst.

Eine solche zwei- oder mehrstufige Ermittlung des Empfangseinrichtungs-Verhaltens läßt sich einfach realisieren und schnell durchführen. Die die Ermittlung durchführende Anordnung kann einen einfachen Aufbau aufweisen (ohne größeren Speicher auskommen) und dennoch in kurzer Zeit und ohne größere Behinderung der restlichen Komponenten der die Anordnung enthaltenden Einheit ermitteln, wie die Empfangseinrichtung die gerade übertragenen Daten zu behandeln hat.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1: eine Darstellung zur Veranschaulichung der nachfolgend näher beschriebenen Vorgehensweise bei der Ermittlung, wie die Empfangseinrichtung empfangene Daten zu behandeln hat, und
- Figuren 2 und 3: Darstellungen zur Veranschaulichung herkömmlicher Vorgehensweisen bei der Ermittlung, wie die Empfangseinrichtung empfangene Daten zu behandeln hat.

Die im folgenden näher beschriebene Empfangseinrichtung ist Bestandteil einer an einen CAN-Bus angeschlossenen Einheit.

Sie kann jedoch auch in beliebigen anderen Einheiten eingesetzt werden, die von den ihnen zugeführten Daten nur bestimmte Daten weiterleiten und/oder weiterverarbeiten.

Die Daten, um die es im betrachteten Beispiel geht, sind jeweils die eine über den CAN-Bus übertragene Message repräsentierenden Daten. Bei anderen Systemen kann es sich selbstverständlich auch um beliebige andere Daten-Einheiten, beispielsweise um Frames oder um sonstige Datenpakete handeln.

Die Daten, die aus den empfangenen Daten extrahiert werden, und in Abhängigkeit von welchen entschieden wird, wie die Empfangseinrichtung die empfangenen Daten zu behandeln hat, sind im betrachteten Beispiel die 11 oder 29 Bits des Identifier-Feldes einer über den CAN-Bus übertragenen Message. Diese extrahierten Daten enthalten eine Information über den Inhalt der betreffenden Message. Die nachfolgend näher beschriebenen Besonderheiten der Empfangseinrichtung können in entsprechend abgewandelter Form auch zum Einsatz kommen, wenn die extrahierten Daten andere Informationen, beispielsweise Informationen über den Sender oder den Empfänger der empfangenen Daten enthalten.

Die Entscheidung der Empfangseinrichtung darüber, wie sie die empfangenen Daten zu behandeln hat, ist im betrachteten Beispiel eine Entscheidung darüber, ob und gegebenenfalls wohin sie die empfangenen Daten weiterleitet.

Die Entscheidung darüber, wie die Empfangseinrichtung die empfangenen Daten zu behandeln hat, kann aber auch eine beliebige andere Entscheidung sein, beispielsweise eine Entscheidung darüber, ob und gegebenenfalls wie die Empfangseinrichtung die empfangenen Daten verarbeitet.

Die im folgenden näher beschriebene Empfangseinrichtung zeichnet sich dadurch aus, daß die Empfangseinrichtung abhängig von einem Teil der extrahierten Daten ermittelt, wie die empfangenen Daten zu behandeln sein könnten, und daß die Empfangseinrichtung unter Berücksichtigung des Ergebnisses dieser Ermittlung ermittelt, wie die empfangenen Daten tatsächlich zu behandeln sind.

Im folgenden wird zunächst in allgemeiner Form, und dann anhand eines konkreten Beispiels beschrieben, wie eine solche Empfangseinrichtung realisiert werden kann. Es dürfte einleuchten und bedarf keiner näheren Erläuterung, daß zur Realisierung einer solchen Empfangseinrichtung unzählige weitere Möglichkeiten existieren.

Im betrachteten Beispiel
- wird der Teil der extrahierten Daten, unter Verwendung dessen ermittelt wird, wie die empfangenen Daten zu behandeln sein könnten, durch ein Ausmaskieren bestimmter Bits der extrahierten Daten erhalten, wobei prinzipiell frei wählbar ist, welche Bits und wie viele Bits ausmaskiert werden,
- wird der Teil der extrahierten Daten, unter Verwendung dessen ermittelt wird, wie die empfangenen Daten zu behandeln sein könnten, zur Adressierung einer Speichereinrichtung verwendet,
- sind in dieser Speichereinrichtung Informationen darüber gespeichert, wie die Daten zu behandeln sein könnten,
- enthalten die in der Speichereinrichtung gespeicherten Informationen Angaben darüber, was getan werden muß, um entscheiden zu können, wie die empfangenen Daten tatsächlich zu behandeln sind (im betrachteten Beispiel: Angaben darüber, mit welchem Wert oder mit welchen Werten die extrahierten Daten oder ein ausgewählter Teil derselben verarbeitet werden müssen, und/oder Angaben darüber, wo der Wert oder die Werte gespeichert sind, mit welchen die extrahierten Daten oder der ausgewählte Teil derselben verarbeitet werden müssen), und
- besteht die Verarbeitung der extrahierten Daten oder des ausgewählten Teils derselben darin, daß überprüft wird, ob diese mit einem bestimmten Wert oder mit einem von mehreren bestimmten Werten übereinstimmen.

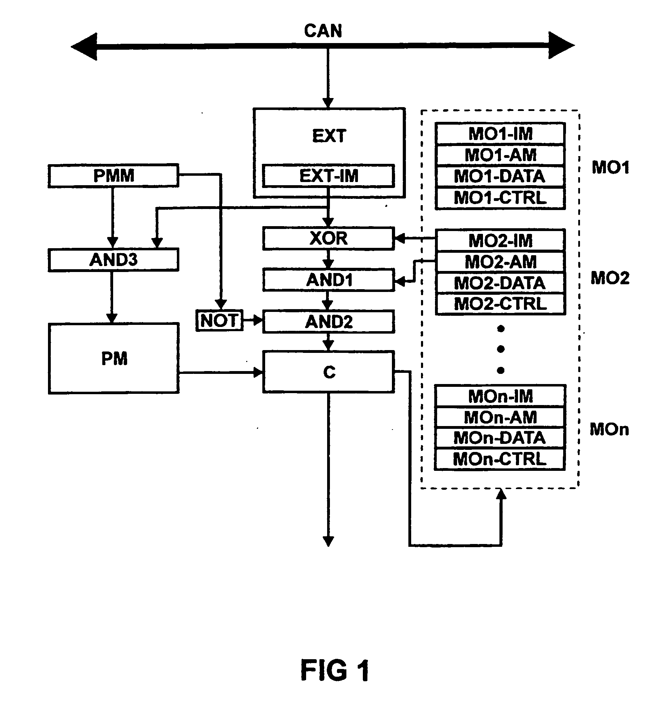

Eine mögliche praktische Realisierung dieser zunächst allgemein beschriebenen Empfangseinrichtung ist in Figur 1 gezeigt und wird unter Bezugnahme hierauf im folgenden näher beschrieben. Die Figur 1 zeigt die vorliegend besonders interessierenden Teile der Empfangseinrichtung und der Message Objects.

Die in der Figur 1 gezeigte Anordnung umfaßt eine Extrahierungsvorrichtung EXT, Message Objects MO1, MO2, ... MOn, ein XOR-Glied XOR, ein erstes UND-Glied AND1, ein zweites UND-Glied AND2, einen Pointermasken-Speicher PMM, ein drittes UND-Glied AND3, einen Pointer-Speicher PM, ein NICHT-Glied NOT und eine Vergleichseinrichtung C, wobei
- die Extrahierungsvorrichtung EXT den in den Figuren 2 und 3 gezeigten und unter Bezugnahme darauf beschriebenen Extrahierungsvorrichtungen EXT entspricht,
- die Message Objects MO1, MO2, ... MOn den in der Figur 2 gezeigten und unter Bezugnahme darauf beschriebenen Message Objects MO1, MO2, ... MOn entsprechen,
- das XOR-Glied XOR sowohl bezüglich des Aufbaus als auch bezüglich der der XOR-Verknüpfung unterzogenen Daten dem in der Figur 2 gezeigten und unter Bezugnahme darauf beschriebenen XOR-Glied XOR entspricht,
- das erste UND-Glied AND1 sowohl bezüglich des Aufbaus als auch bezüglich der der UND-Verknüpfung unterzogenen Daten dem in der Figur 2 gezeigten und unter Bezugnahme darauf beschriebenen UND-Glied AND entspricht,
- der Pointer-Masken-Speicher eine Maske enthält, durch welche (im Zusammenwirken mit dem dritten UND-Glied AND3) der Teil des aus der Message extrahierten Identifiers, unter Verwendung dessen ermittelt wird, wie die empfangenen Daten zu behandeln sein könnten, festgelegt wird.
- das dritte UND-Glied AND3 die im Pointer-Masken-Speicher PMM gespeicherte Maske und den aus der gerade übertragenen Message extrahierten Identifier bitweise einer UND-Verknüpfung unterzieht,
- der Pointer-Speicher PM
   - durch das Ergebnis der durch das UND-Glied AND3 durchgeführten UND-Verknüpfung adressiert wird,
   - Informationen darüber enthält, wie die empfangenen Daten zu behandeln sein könnten, genauer gesagt Einträge enthält, die angeben, welchem Message Object oder welchen Message Objects Identifier zugeordnet sind, die mit dem aus der Message extrahierten Identifier in dem nicht ausmaskierten Teil derselben übereinstimmen, und
   - die ausgelesenen Daten an die Vergleichseinrichtung C ausgibt,
- das NICHT-Glied NOT eine bitweise Invertierung der im Pointer-Masken-Speicher gespeicherten Maske durchführt,
- das zweite UND-Glied AND2 die vom NICHT-Glied NOT ausgegebenen Daten und die vom ersten UND-Glied AND1 ausgegebenen Daten bitweise einer UND-Verknüpfung unterzieht, und
- die Vergleichseinrichtung C überprüft, ob das vom zweiten UND-Glied AND2 ausgegebene Ergebnis gleich oder ungleich 0 ist, und abhängig hiervon für eine Fortsetzung oder eine Beendigung der Überprüfung sorgt.

Wie vorstehend bereits erwähnt wurde, arbeiten und kooperieren die Extrahierungsvorrichtung EXT, die Message Objects MO1, MO2, ... MOn, das XOR-Glied XOR, und das erste UND-Glied AND1 wie die entsprechenden Elemente der in der Figur 2 gezeigten und eingangs unter Bezugnahme darauf beschriebenen Anordnung. Bezüglich weiterer Einzelheiten hierzu wird auf die auf die Figur 2 bezugnehmenden Ausführungen verwiesen.

Allerdings wird bei der in der Figur 1 gezeigten Anordnung - im Gegensatz zu der in der Figur 2 gezeigten Anordnung - nicht der Reihe nach für alle Message Objects MO1, MO2, ... MOn überprüft, ob diesen die gerade übertragene Message zuzuführen ist; die Überprüfung erfolgt nur für ein oder mehrere ausgewählte Message Objects.

Diese Auswahl der zu berücksichtigenden Message Objects erfolgt durch den Pointer-Masken-Speicher PMM, das dritte UND-Glied AND3, und den Pointer-Speicher: die im Pointer-Masken-Speicher PMM gespeicherte Maske und der aus der Message extrahierte Identifier werden einer UND-Verknüpfung unterzogen, wodurch bestimmte Bits des Identifiers ausmaskiert werden und der nicht ausmaskierte Teil des Identifiers weiterverwendet wird. Dieser Teil der Identifiers wird zur Adressierung des Pointer-Speichers PM verwendet, welcher, wie vorstehend bereits erwähnt wurde, unter den jeweiligen Adressen Einträge (Pointer) enthält, die angeben, welchem Message Object oder welchen Message Objects Identifier zugeordnet sind, die mit dem aus der Message extrahierten Identifier im nicht ausmaskierten Teil desselben übereinstimmen. Das diesen Pointer oder diese Pointer enthaltende Ausgangssignal des Pointer-Speichers PM wird als Auswahlsignal zur Auswahl der Message Objects verwendet, deren Identifier durch die XOR-Glied XOR und das erste UND-Glied AND1 mit dem aus der Message extrahierten Identifier oder einem ausgewählten Teil desselben zu vergleichen sind. Dadurch kann die Entscheidung, ob und gegebenenfalls welchem Message Object die gerade übertragene Message zugeführt wird erheblich schneller erfolgen als es bei der in der Figur 2 gezeigten Anordnung der Fall ist. Die zur Auswahl der Message Objects, deren Identifier durch die XOR-Glied XOR und das erste UND-Glied AND1 mit dem aus der Message extrahierten Identifier zu vergleichen sind, erforderlichen Komponenten, nämlich der Pointer-Masken-Speicher PMM, das dritte UND-Glied AND3, und der Pointer-Speicher PM lassen sich ohne großen Aufwand realisieren. Insbesondere kann der Pointer-Speicher PM im Vergleich zum Pointer-Speicher PM der in der Figur 3 gezeigten Anordnung sehr klein sein, da er nur durch einen Teil des Identifiers adressiert wird.

Vorzugsweise ist eine Möglichkeit vorgesehen, um die Vorauswahl der Message Objects, deren Identifier durch das XOR-Glied XOR und das erste UND-Glied AND1 mit dem aus der Message extrahierten Identifier oder einem ausgewählten Teil desselben zu vergleichen sind, zu deaktivieren und wie bei der Anordnung gemäß Figur 2 durch das XOR-Glied XOR und das erste UND-Glied AND1 der Reihe nach alle Message Objects zu überprüfen. Das Deaktivieren der Message-Object-Vorauswahl kann, sofern nicht von der im folgenden beschriebenen zusätzlichen Verwendungsmöglichkeit der Pointer-Maske (Verknüpfung mit dem Ausgangssignal des zweiten UND-Gliedes AND2) Gebrauch gemacht werden soll, durch Setzen der Pointer-Maske auf einen bestimmten Wert (im betrachteten Beispiel auf den Wert 0) erreicht werden.

Es kann auch vorgesehen werden, die Object-Message-Vorauswahl nur für einen Teil der Object Messages durchzuführen und die Identifier der restlichen Object Messages wie bei der Anordnung gemäß Figur 2 der Reihe nach mit den aus den Messages extrahierten Identifiern oder ausgewählten Teilen derselben zu vergleichen.

Insbesondere für den Fall, daß die Vorauswahl der Message Objects, deren Identifier durch das XOR-Glied XOR und das erste UND-Glied AND1 mit dem aus der Message extrahierten Identifier oder einem ausgewählten Teil desselben zu vergleichen sind, deaktiviert ist, erweist es sich als vorteilhaft, wenn wie im betrachteten Beispiel vorgesehen wird, das vom ersten UND-Glied AND1 ausgegebene Ergebnis und die durch das NICHT-Glied NOT negierte Pointer-Maske aus dem Pointer-Masken-Speicher PMM einer (im betrachteten Beispiel durch das zweite UND-Glied AND2 durchgeführten) logischen Verknüpfung zu unterziehen, und es vom Ergebnis dieser Verknüpfung abhängig zu machen, ob und gegebenenfalls welchem Message Object die gerade übertragene Message zuzuführen ist. Dadurch kann beim Vergleich der in den Message Objects gespeicherten Identifier mit den aus den Messages extrahierten Identifiern noch flexibler auf individuelle Besonderheiten des Systems eingegangen werden. Das Vorsehen des NICHT-Gliedes NOT ermöglicht es, daß dieser Mechanismus bei aktivierter Message-Object-Vorauswahl aktiv bleiben kann. Daß der Mechanismus auch bei aktivierter Message-Object-Vorauswahl aktiv ist, erweist sich als vorteilhaft, weil dies die Erstellung der in den Message Objects gespeicherten Akzeptanzmasken erleichtern kann.

Die beschriebene Empfangseinrichtung kann nach alledem mit geringem Aufwand unter allen Umständen schnell und einfach entscheiden, wie die empfangenen Daten zu behandeln sind.

### Bezugszeichenliste

- ANDx: UND-Glied
- C: Vergleichseinrichtung
- CAN: CAN-Bus
- EXT: Extrahierungsvorrichtung
- EXT-IM: Identifier-Speicher von EXT
- MOx: Message Object
- MOx-AM: Akzeptanzmasken-Speicher von MOx
- MOx-CTRL: Speicher in MOx zum Speichern von Messages oder Teilen derselben
- MOx-DATA: Speicher in MOx zum Speichern von Messages oder Teilen derselben
- MOx-IM: Identifier-Speicher von MOx
- NOT: NICHT-Glied
- PM: Pointer-Speicher
- PMM: Pointermasken-Speicher
- SEL: Auswahlvorrichtung
- XOR: XOR-Glied

## Patentansprüche

1. Empfangseinrichtung (EXT, PMM, AND3, PM, NOT, XOR, AND1, AND2, C, MO1, M02, MOn) zum Empfangen von über einen CAN-Bus übertragenen Messages, wobei die Empfangseinrichtung
- ein Datenbehandlungsmittel enthält, das in der Lage ist, die empfangenen Messages nach einer aus einer Vielzahl von Behandlungs-Möglichkeiten auswählbaren Behandlungs-Möglichkeit zu behandeln, und
- ein Extrahierungsmittel (EXT) enthält, welches aus den empfangenen Messages den Inhalt des Identifier-Feldes extrahiert, und
- eine Entscheidungsvorrichtung (PMM, AND3, PM, NOT, XOR, AND1, AND2, C) enthält, welche abhängig vom Inhalt des Identifier-Feldes entscheidet, nach welcher Behandlungs-Möglichkeit das Datenbehandlungsmittel die empfangenen Messages zu behandeln hat,
**dadurch gekennzeichnet,**
**daß** die Entscheidungsvorrichtung (PMM, AND3, PM, NOT, XOR, AND1, AND2, C)
- ein erstes Entscheidungsmittel (PMM, AND3, PM) enthält, das abhängig von einem Teil des Inhalts des Identifier-Feldes einer jeweiligen Message aus einer Vielzahl von Message Objects ein oder mehrere Message Objects auswählt, in welche die betreffende Message oder ein Teil derselben zu speichern sein könnte, und
- ein zweites Entscheidungsmittel (PMM, NOT, XOR, AND1, AND2, C) enthält, das unter den vom ersten Entscheidungsmittel (PMM, AND3, PM) ausgewählten Message Objects abhängig vom Inhalt des Identifier-Feldes dasjenige Message Object auswählt, in welchem die betreffende Message oder ein Teil derselben zu speichern ist.

2. Empfangseinrichtung nach Anspruch 1,
**dadurch gekennzeichnet,**
**daß** der Teil des Inhalts des Identifier-Feldes, in Abhängigkeit von welchem das erste Entscheidungsmittel (PMM, AND3, PM) aus der Vielzahl der Message Objects ein oder mehrere Message Objects auswählt, in welchem die jeweils empfangene Message oder ein Teil derselben zu speichern sein könnte, durch eine logische Verknüpfung des Inhalts des Identifier-Feldes mit einer Maske erhalten wird.

3. Empfangseinrichtung nach einem der vorhergehenden Ansprüche,
**dadurch gekennzeichnet,**
**daß** der Teil des Inhalts des Identifier-Feldes, in Abhängigkeit von welchem das erste Entscheidungsmittel (PMM, AND3, PM) aus der Vielzahl der Message Objects ein oder mehrere Message Objects auswählt, in welchen die jeweils empfangene Message oder ein Teil derselben zu speichern sein könnte, zur Adressierung einer Speichereinrichtung (PM) verwendet wird.

4. Empfangseinrichtung nach Anspruch 3,
**dadurch gekennzeichnet,**
**daß** in der Speichereinrichtung (PM) Informationen darüber gespeichert sind, in welchen Message Objects die jeweils empfangene Message zu speichern sein könnte.

5. Empfangseinrichtung nach Anspruch 4,
**dadurch gekennzeichnet,**
**daß** die in der Speichereinrichtung (PM) gespeicherten Informationen Angaben darüber enthalten, was getan werden muß, um entscheiden zu können, in welchem Message Object die jeweils empfangene Message tatsächlich zu speichern ist.

6. Empfangseinrichtung nach Anspruch 4 oder 5,
**dadurch gekennzeichnet,**
**daß** die in der Speichereinrichtung (PM) gespeicherten Informationen Angaben darüber enthalten, mit welchem Wert oder mit welchen Werten der Inhalt des Identifier-Feldes oder ein ausgewählter Teil desselben verarbeitet werden muß, um entscheiden zu können, in welchem Message Object die jeweils empfangene Message zu speichern ist.

7. Empfangseinrichtung nach Anspruch 6,
**dadurch gekennzeichnet,**
**daß** die in der Speichereinrichtung (PM) gespeicherten Informationen Angaben darüber enthalten, wo der Wert oder die Werte, mit welchen der Inhalt des Identifier-Feldes oder der ausgewählte Teil desselben verarbeitet werden muß, gespeichert sind.

8. Empfangseinrichtung nach Anspruch 6 oder 7,
**dadurch gekennzeichnet,**
**daß** die Verarbeitung des Inhaltes des Identifier-Feldes oder des ausgewählten Teils desselben darin besteht, daß überprüft wird, ob dieser mit einem bestimmten Wert oder mit einem von mehreren bestimmten Werten übereinstimmt.

9. Empfangseinrichtung nach einem der vorhergehenden Ansprüche,
**dadurch gekennzeichnet,**
**daß** die Empfangseinrichtung (EXT, PMM, AND3, PM, NOT, XOR, AND1, AND2, C, MO1, M02, MOn) Bestandteil eines CAN-Controllers ist.

10. Empfangseinrichtung nach einem der vorhergehenden Ansprüche,
**dadurch gekennzeichnet,**
**daß** die Entscheidungsvorrichtung (PMM, AND3, PM, NOT, XOR, AND1, AND2, C) überprüft, ob der aus der Message extrahierte Identifier oder Teile desselben mit einem dem jeweiligen Message Objects zugeordneten Identifier übereinstimmt.

11. Empfangseinrichtung nach Anspruch 10,
**dadurch gekennzeichnet,**
**daß** die Entscheidungsvorrichtung (PMM, AND3, PM, NOT, XOR, AND1, AND2, C) dann, wenn sie eine Übereinstimmung feststellt, entscheidet, daß die jeweils empfangene Message in dem Message Object zu speichern ist, dem der Identifier zugeordnet ist, mit welchem der aus der Message extrahierte Identifier oder ein Teil desselben übereinstimmt.

## Claims

1. Receiving device (EXT, PMM, AND3, PM, NOT, XOR, AND1, AND2, C, MO1, M02, MOn) for receiving messages transmitted via a CAN bus, the receiving device containing
- a data handling means, which is able to handle the received messages according to a handling possibility that can be selected from a multiplicity of handling possibilities, and
- an extraction means (EXT), which extracts the content of the identifier field from the received messages,
- a decision device (PMM, AND3, PM, NOT, XOR, AND1, AND2, C), which decides, depending on the content of the identifier field, about the handling possibility according to which the data handling means has to handle the received messages,
**characterized**
**in that** the decision device (PMM, AND3, PM, NOT, XOR, AND1, AND2, C) contains
- a first decision means (PMM, AND3, PM), which selects, depending on a part of the content of the identifier field of a respective message, from a multiplicity of message objects, one or more message objects in which the relevant message or a part thereof might have to be stored, and
- a second decision means (PMM, NOT, XOR, AND1, AND2, C), which selects, from among the message objects selected by the first decision means (PMM, AND3, PM), depending on the content of the identifier field, that message object in which the relevant message or a part thereof is to be stored.

2. Receiving device according to Claim 1,
**characterized**
**in that that** part of the content of the identifier field depending on which the first decision means (PMM, AND3, PM) selects from the multiplicity of message objects one or more message objects in which the respectively received message or a part thereof might have to be stored is obtained by a logic combination of the content of the identifier field with a mask.

3. Receiving device according to one of the preceding claims,
**characterized**
**in that that** part of the content of the identifier field depending on which the first decision means (PMM, AND3, PM) selects from the multiplicity of message objects one or more message objects in which the respectively received message or a part thereof might have to be stored is used for addressing a memory device (PM).

4. Receiving device according to Claim 3,
**characterized**
**in that** information items regarding the message objects in which the respectively received message might have to be stored are stored in the memory device (PM).

5. Receiving device according to Claim 4,
**characterized**
**in that** the information items stored in the memory device (PM) contain details regarding what must be done in order to be able to decide about the message object in which the respectively received message is actually to be stored.

6. Receiving device according to Claim 4 or 5,
**characterized**
**in that** the information items stored in the memory device (PM) contain details regarding the value or values with which the content of the identifier field or a selected part thereof must be processed in order to be able to decide about the message object in which the respectively received message is to be stored.

7. Receiving device according to Claim 6,
**characterized**
**in that** the information items stored in the memory device (PM) contain details regarding where the value or values with which the content of the identifier field or the selected part thereof must be processed are stored.

8. Receiving device according to Claim 6 or 7,
**characterized**
**in that** the processing of the content of the identifier field or of the selected part thereof consists in checking whether the latter corresponds to a specific value or to one of a plurality of specific values.

9. Receiving device according to one of the preceding claims,
**characterized**
**in that** the receiving device (EXT, PMM, AND3, PM, NOT, XOR, AND1, AND2, C, MO1, M02, MOn) is part of a CAN controller.

10. Receiving device according to one of the preceding claims,
**characterized**
**in that** the decision device (PMM, AND3, PM, NOT, XOR, AND1, AND2, C) checks whether the identifier extracted from the message or parts of said identifier corresponds to an identifier assigned to the respective message objects.

11. Receiving device according to Claim 10,
**characterized**
**in that** when the decision device (PMM, AND3, PM, NOT, XOR, AND1, AND2, C) ascertains correspondence, it decides that the respectively received message is to be stored in the message object to which is assigned the identifier to which the identifier extracted from the message or a part of said identifier corresponds.

## Revendications

1. Dispositif de réception (EXT, PMM, AND3, PM, NOT, XOR, AND1, AND2, C, MO1, MO2, MOn) pour la réception de messages transmis au moyen d'un bus CAN, le dispositif de réception contenant
- un moyen de traitement de données qui est en mesure de traiter les messages reçus selon une possibilité de traitement pouvant être sélectionnée parmi une pluralité de possibilités de traitement, et
- un moyen d'extraction (EXT) qui extrait des messages reçus le contenu du champ d'identificateur, et
- un dispositif de décision (PMM, AND3, PM, NOT, XOR, AND1, AND2, C) qui décide en fonction du contenu du champ d'identificateur selon quelle possibilité de traitement le moyen de traitement de données doit traiter les messages reçus,
**caractérisé en ce que**
le dispositif de décision (PMM, AND3, PM, NOT, XOR, AND1, AND2, C) contient
- un premier moyen de décision (PMM, AND3, PM) qui sélectionne en fonction d'une partie du contenu du champ d'identificateur d'un message concerné parmi une pluralité de Message Objects un ou plusieurs Message Objects, dans lesquels le message concerné ou une partie de ce message pourrait être à stocker, et
- un second moyen de décision (PMM, NOT, XOR, AND1, AND2, C) qui sélectionne parmi les Message Objects sélectionnés par le premier moyen de décision (PMM, AND3, PM) en fonction du contenu du champ d'identificateur le Message Object, dans lequel le message concerné ou une partie du message doit être stocké.

2. Dispositif de réception selon la revendication 1,
**caractérisé en ce que**
la partie du contenu du champ d'identificateur, en fonction de laquelle le premier moyen de décision (PMM, AND3, PM) sélectionne parmi la pluralité des Message Objects un ou plusieurs Message Objects, dans lesquels le message respectivement reçu ou une partie de ce message pourrait être à stocker, est obtenue par une association logique du contenu du champ d'identificateur avec un masque.

3. Dispositif de réception selon l'une quelconque des revendications précédentes,
**caractérisé en ce que**
la partie du contenu du champ d'identificateur, en fonction de laquelle le premier moyen de décision (PMM, AND3, PM) sélectionne parmi la pluralité des Message Objects un ou plusieurs Message Objects, dans lesquels le message respectivement reçu ou une partie de ce message pourrait être à stocker, est utilisée pour l'adressage d'un dispositif de mémoire (PM).

4. Dispositif de réception selon la revendication 3,
**caractérisé en ce que**
dans le dispositif de mémoire (PM) sont stockées des informations sur la question de savoir dans quels Message Objects le message respectivement reçu pourrait être à stocker.

5. Dispositif de réception selon la revendication 4,
**caractérisé en ce que**
les informations stockées dans le dispositif de mémoire (PM) contiennent des indications sur ce qui doit être fait pour pouvoir décider dans quel Message Object le message respectivement reçu doit être réellement stocké.

6. Dispositif de réception selon la revendication 4 ou 5,
**caractérisé en ce que**
les informations stockées dans le dispositif de mémoire (PM) contiennent des indications sur le fait de savoir avec quelle valeur ou avec quelles valeurs le contenu du champ d'identificateur ou une partie sélectionnée de ce champ doit être traité, afin de pouvoir décider dans quel Message Object le message respectivement reçu doit être stocké.

7. Dispositif de réception selon la revendication 6,
**caractérisé en ce que**
les informations stockées dans le dispositif de mémoire (PM) contiennent des indications sur l'endroit où la valeur ou les valeurs, avec lesquelles le contenu du champ d'identificateur ou la partie sélectionnée de ce champ doit être traité, sont stockées.

8. Dispositif de réception selon la revendication 6 ou 7,
**caractérisé en ce que**
le traitement du contenu du champ d'identificateur ou de la partie sélectionnée de ce champ consiste à vérifier si ce contenu concorde avec une valeur définie ou avec une de plusieurs valeurs définies.

9. Dispositif de réception selon l'une quelconque des revendications précédentes,
**caractérisé en ce que**
le dispositif de réception (EXT, PMM, AND3, PM, NOT, XOR, AND1, AND2, C, MO1, MO2, MOn) fait partie d'un contrôleur CAN.

10. Dispositif de réception selon l'une quelconque des revendications précédentes,
**caractérisé en ce que**
le dispositif de décision (PMM, AND3, PM, NOT, XOR, AND1, AND2, C) vérifie si l'identificateur extrait du message ou des parties de celui-ci concordent avec un identificateur attribué au Message Object concerné.

11. Dispositif de réception selon la revendication 10,
**caractérisé en ce que**
le dispositif de décision (PMM, AND3, PM, NOT, XOR, AND1, AND2, C) décide dans le cas où il constate une concordance que le message respectivement reçu doit être stocké dans le Message Object auquel l'identificateur est attribué, avec lequel l'identificateur extrait du message ou une partie de cet identificateur concorde.
